# EUROPEAN PATENT SPECIFICATION

(11) **EP 2 945 797 B1**
(45) Date of publication and mention of the grant of the patent: **13.04.2022**
(21) Application number: 14740352.1
(22) Date of filing: 16.01.2014
(51) Int. Cl.: B32B 9/00

(54) **TRANSFER TAPE COMPRISING ADHESIVE FOR A PROTECTIVE WRAP**
TRANSFERBAND MIT HAFTSTOFF FÜR EINE SCHUTZHÜLLE
BANDE DE TRANSFERT COMPRENANT UN ADHÉSIF POUR ENVELOPPE PROTECTRICE

(30) Priority: 17.01.2013 US 201361753452 P; 03.04.2013 US 201361807784 P
(43) Date of publication of application: 25.11.2015
(73) Proprietor: NIROTEK A.C.S. LTD, 10803 Kibbutz, Nir-David (IL)
(72) Inventor: RIMON, Uri, 36023 Kiryat Tivon (IL)
(74) Representative: Lecomte & Partners
(86) International application number: PCT/IL2014/050057
(87) International publication number: WO 2014/111938

(56) References cited:
- WO-A1-2012/153847
- US-A1- 2007 223 315
- US-A1- 2010 205 910
- US-A1- 2012 080 614
- US-A1- 2012 100 267

## Description

### FIELD OF THE INVENTION

The present invention generally pertains to a transfer tape useful as a means of closure for a protective wrap for products stored for long periods of time in the open air, and a method for producing said transfer tape.

### BACKGROUND OF THE INVENTION

Agricultural products such as cotton are frequently harvested and baled and then left for up to several months in the open field. The baled products are exposed to extremes of temperature, rain, wind and sunlight, the UV in the last tending to degrade adhesives in the wrapping. Wind, and especially high temperatures can cause the wrapping to fail, exposing the product and allowing it to be scattered.

There are many products in the prior art intended to bale such agricultural products.

International patent application published WO 2012/153847 A1 relates to a packaging material for a lithium ion battery and discloses a transfer tape according to the preamble of claim 1 and a method for producing a transfer tape, according to the preamble of claim 6.

US patent application published US 2012/0100267 A1 relates to food packing articles.

US patent application published US 2010/0205910 A1 relates to a prestretched agricultural stretch wrap film which is used for baling application.

US patent application published US 2007/0223315 A1 relates to a wristwatch.

US patent application published US 2012/0080614 A1 relates to a multilayer structure for authentication.

One of the better prior art wrap products comprises a wrap film which is applied in several layers, with an adhesive between the two outer layers. Although this product works reasonably well when applied under clean conditions, the dust, dirt and particles of crop tend to degrade the quality of the adhesive bond and can cause the wrap to fail under certain harsh conditions of extended open-air storage.

It is therefore a long felt need to provide a product comprising an adhesive useful for creating a protective wrap for products stored for long periods of time in the open air.

### SUMMARY OF THE INVENTION

It is an object of the present invention to disclose, a transfer tape useful for joining an outer layer of a protective wrap to an inner layer of said protective wrap, for protecting a bale of cotton, said transfer tape having:
a. at least one outer adhesive layer adapted to adhere at least one UV protective film to said protective wrap's outer layer;
b. said at least one UV protective film connected on a first side to said outer adhesive layer; and
c. at least one inner adhesive layer connected to a second side of said at least one protective film, said inner adhesive layer adapted to adhere to said protective wrap's inner layer,

wherein said outer adhesive layer comprises a pressure-sensitive acrylic adhesive, said pressure-sensitive acrylic adhesive being UV resistant and water resistant; said inner adhesive layer comprises a pressure-sensitive rubber-based adhesive, said pressure-sensitive rubber-based adhesive being water resistant; and said UV protective film being a UV-resistant flexible polymer film;
wherein resistance to degradation of a protective function of said transfer tape adhered to said protective wrap under prolonged exposure to sunshine is generated by said UV resistance of said outer adhesive layer and said UV resistance of said UV protective film, and resistance to damage by rain of said transfer tape adhered to said protective wrap is generated by said water resistance of said outer adhesive layer and said water resistance of said inner adhesive layer.

It is another object of the present invention to disclose the transfer tape, wherein at least one of the following is being held true:
a. the thickness of said outer adhesive layer is in the range of 20 gm/m² and 60 gm/m² of a first adhesive;
b. said transfer tape is adherable to said protective wrap's outer layer under industrial conditions and is adherable to said protective wrap's inner layer under field conditions;
c. said outer adhesive layer comprises a material selected from a group consisting of: a UV-cured adhesive, a solvent-borne adhesive, a water-borne adhesive, and a hot-melt (solvent-less) adhesive;
d. the thickness of said inner adhesive layer is in the range of 50 gm/m² and 120 gm/m² of a second adhesive;
e. said inner adhesive layer comprises an adhesive having the following properties: high hot shear resistance, high hot peel resistance, high cold peel resistance, high cold track, good immediate bonding to plastic film substrate; high resistance to wetness, and some resistance to UV radiation; and
f. said transfer tape additionally comprising a layer of particulate UV blocking material, at least one of the following is being held true: (i) said particulate UV blocking material comprises at least one pigment; (ii) said particulate UV blocking material comprises at least one pigment selected from a group consisting of titanium oxide, zinc oxide and any combination thereof.

It is another object of the present invention to disclose the transfer tape, wherein said at least one outer adhesive layer additionally comprises at least one UV protective material; at least one of the following is being held true
a. said at least one UV protective material comprises an additive selected from a group consisting of: UVA reflectors, UVB reflectors, UVA absorbers, UVB absorbers, and any combination thereof;
b. said at least one UV protective material comprises at least one photostabilizer; and
c. said at least one UV protective material is at least one photostabilizer selected from a group consisting of hindered amine light stabilizer, HALS, free radical scavengers, free radical quenchers and any combination thereof.

It is another object of the present invention to disclose the transfer tape comprised within a protective wrap for a product to be left in the open air, said protective wrap comprising
a. an outer protective layer; and
b. an inner protective layer; wherein said transfer tape joins said outer protective layer to said inner protective layer.

It is another object of the present invention to disclose the transfer tape comprised within a transfer tape product, said transfer tape product adapted for storage and transportation of said transfer tape, said transfer tape product additionally comprising:
a. an outer cover layer releasably attached to a first side of said transfer tape;
b. a central carrier layer with a first side releasably attached to a second side of said transfer tape;
c. a permanent adhesive layer with first side attached to a second side of said central carrier layer; and
d. an inner cover layer releasably attached to a second side of said permanent adhesive layer.

It is another object of the present invention to disclose a method of producing a transfer tape useful as a closure tape for a protective wrap for protecting a bale of cotton, comprising steps of:
a. providing a UV protective film;
b. attaching at least one outer adhesive layer to a first side of said UV protective film; and
c. attaching at least one inner adhesive layer to a second side of said UV protective film; wherein said outer adhesive layer comprises a pressure-sensitive acrylic adhesive, said pressure-sensitive acrylic adhesive being UV resistant and water resistant; said inner adhesive layer comprises a rubber-based adhesive, said rubber adhesive being water resistant; and said UV protective film being a UV-resistant flexible polymer film;
   wherein resistance to degradation of a protective function of said transfer tape adhered to said protective wrap under prolonged exposure to sunshine is generated by said UV resistance of said outer adhesive layer and said UV resistance of said UV protective film, and resistance to damage by rain of said transfer tape adhered to said protective wrap is generated by said water resistance of said outer adhesive layer and said water resistance of said inner adhesive layer

It is another object of the present invention to disclose the method, additionally comprising at least one step selected from a group consisting of
a. selecting the thickness of said outer adhesive layer to be in the range of 20 gm/m² and 60 gm/m² of a first adhesive material;
b. selecting a material of said outer adhesive layer from a group consisting of: a UV-cured adhesive, a solvent-borne adhesive, a water-borne adhesive, and a hot-melt (solvent-less) adhesive;
c. selecting the thickness of said inner adhesive layer to be in the range of 50 gm/m² to 120 gm/m² of a second adhesive; and
d. selecting said inner adhesive layer to be an adhesive having the following properties: high hot shear resistance, high hot peel resistance, high cold peel resistance, high cold track, good immediate bonding to plastic film substrate, high resistance to wetness, and some resistance to UV radiation; and
e. providing said transfer tape with a layer of particulate UV blocking material; at least one of the following being held true: (i) said particulate UV blocking material comprises at least one pigment;
(ii) said particulate UV blocking material comprises at least one pigment selected from a group consisting of titanium oxide, zinc oxide and any combination thereof.

It is another object of the present invention to disclose the method, additionally comprising steps of providing at least one UV protective material within said at least one outer adhesive layer; further wherein said method additionally comprising at least one step selected from
a. selecting said at least one UV protective material to be an additive selected from a group consisting of: UVA reflectors, UVB reflectors, UVA absorbers, UVB absorbers, and any combination thereof;
b. providing at least one photostabilizer as said at least one UV protective material; and
c. providing, as said at least one UV protective material, at least one photostabilizer comprising hindered amine light stabilizer, HALS, free radical scavengers, free radical quenchers and any combination thereof.

It is another object of the present invention to disclose the method, additionally comprising steps for producing a protective wrap for a product to be left in the open air, said steps comprising:
a. providing said protective wrap's outer layer;
b. providing said protective wrap's inner layer;
c. providing said transfer tape;
d. adhering said protective wrap's outer layer to a first side of said at least one UV protective film;
e. wrapping said protective wrap's inner layer around said product such that a second side of said protective wrap's inner layer faces said product;
f. adhering a first side of said protective wrap's inner layer to a second side of said at least one inner adhesive layer.

It is another object of the present invention to disclose the method additionally comprising steps for producing a transfer tape product for storage and transportation of a transfer tape, said steps comprising:
a. providing an outer cover layer;
b. releasably attaching said outer cover layer to a first side of said transfer tape;
c. providing a central carrier layer;
d. releasably attaching a first side of said central carrier layer to a second side of said transfer tape;
e. attaching a first side of an adhesive layer to a second side of said central carrier layer;
f. providing an inner cover layer; and
g. releasably attaching to a second side of said adhesive layer to said inner cover layer.

### BRIEF DESCRIPTION OF THE FIGURES

In order to better understand the invention and its implementation in practice, a plurality of embodiments and examples will now be described, by way of non-limiting example only, with reference to the accompanying drawings, wherein
Fig. 1 schematically illustrates an embodiment of the transfer tape;
Fig. 2A-B schematically illustrates a wrap comprising the transfer tape of the present invention;
Fig. 3 schematically illustrates sub-product 1, at the end of the first step of processing;
Fig. 4 schematically illustrates sub-product 2, at the end of the second step of processing;
Fig. 5 schematically illustrates an embodiment of a storable product comprising the transfer tape of the invention;
Fig. 6A-B schematically illustrates a wrap-ready product comprising the transfer tape of the invention;
Fig. 7A-B schematically illustrates a method of wrapping a product which creates a protective wrapping from a wrap-ready product;
Fig. 8 schematically illustrates a transfer tape which is not part of the invention;
Fig. 9A-B schematically illustrates a wrap comprising the transfer tape of Fig. 8;
Fig. 10 schematically illustrates sub-product 1, at the end of the first step of a processing which is not part of the invention;
Fig. 11 schematically illustrates an embodiment of a storable product comprising the transfer tape of Fig.8;
Fig. 12A-B schematically illustrates a wrap-ready product which is not part of the invention; and
Fig. 13A-B schematically illustrates a method, not being part of the invention, of wrapping a product which creates a protective wrapping from a wrap-ready product.

### DETAILED DESCRIPTION OF THE PREFERRED EMBODIMENTS

The following description is provided, alongside all chapters of the present invention, so as to enable any person skilled in the art to make use of said invention and sets forth the best modes contemplated by the inventor of carrying out this invention. Various modifications, however, will remain apparent to those skilled in the art, since the generic principles of the present invention have been defined specifically to provide a means and method for creating a product comprising an adhesive useful as a means of closure for a protective wrap for products stored for long periods of time in the open air.

The term **'industrial conditions'** hereinafter refers to controlled production conditions, such as are typically found in a factory. Typically, industrial conditions include at least some control of temperature, air cleanliness and surface cleanliness. Typically, under industrial conditions, no free water, free grease or free oil is present, and neither are chaff or other plant products, or pebbles, dirt, grit or other contaminants,

The term **'field conditions'** hereinafter refers to uncontrolled production conditions, such as occur, for non-limiting example, during harvesting in an open field. Under field conditions, it is not feasible to control factors such as, but not limited to, dampness of the product, temperature, presence of free water, free grease or free oil, or presence of contaminants such as chaff or other plant products, pebbles, dirt, or grit.

The term **'inner'** hereinafter refers to an item closer to the center of the cotton bale or other wrapped object than another, similar item.

The term **'outer'** hereinafter refers to an item further from the center of the cotton bale or other wrapped object than another, similar item. For non-limiting example, the inner wrap layer is closer to the center of the wrapped item than the outer wrap layer; the outer wrap layer at least partially covers the inner wrap layer and so that the outer wrap layer protects the covered portions of the inner wrap layer from the elements.

The term **'about'** hereinafter refers to a range of 25% around a given value.

Throughout, the same number will refer to the same object, and similar numbers refer to objects with similar functions.

The present invention discloses a transfer tape and a method for producing the transfer tape which is capable of serving as a closure tape for a protective wrap to be used in outdoor and agricultural applications, such as, for non-limiting example, for the baling and storage of crops such as cotton.

Such a wrap must satisfy several criteria:
1. It must withstand rain without damage and must protect the underlying product against the wet.
2. It must withstand sunshine, especially UV, without significant degradation of its protective function.
3. It must withstand high temperatures. The temperature of the wrap materials, on a hot day in full sunshine, can reach 60° C.
4. It must withstand wind without failure. One common cause of wind-driven failure is for the wind to raise a free edge of the wrap, thereby causing failure of the wrap. An example of this is where the protective wrap comprises a wrapping material which encircles the product. The ends of the encircling wrapping material overlap; adhesive between the overlapped ends holds the protective wrapping in place. If the adhesive ends sufficiently far from the free end of the outermost overlapped edge or if there is a partial failure of the adhesive due, for example, to UV which reaches the free end of the outermost overlapped edge, the wind can lift the overlapped edge or tunnel into the overlapped edge via the failure, thereby forcing apart the overlapped layers, causing further failure of the adhesive and eventually causing the adhesive to fail entirely so that the protective wrapping fails.
5. It must withstand internal pressure from the cotton. Cotton is baled under pressure so that, during storage, the cotton will attempt to expand. This expansion puts outward pressure on the protective wrap which can only be relieved by increasing the diameter of the bale. Since the protective wrap film can only stretch to a limited degree without affecting the closure area, further expansion of the bale can only take place if the wrap layers slide relative to each other. Such expansion creates shear forces in the wrap's adhesive layers that can be quite large. These large shear forces can lead to failure of the adhesive layer, especially under high temperature conditions (up to 60° C), where adhesives can soften and lose internal structural strength.
6. At least the final step of production of the protective wrap must be capable of being carried out under field conditions, which include conditions likely to interfere with producing a high-quality, long-lasting protective wrap such as:
   a. Presence of airborne dust.
   b. Presence of byproducts such as chaff, particles of product, leaves, stems or seeds.
   c. Presence of dirt, grit, pebbles or other solid contaminants.
   d. Humidity in the air.
   e. Rain or other sources of free water.
   f. Presence of other fluids, such as plant juices or oils and greases from machinery.
   g. Uncontrolled temperature. For example, air temperature during harvesting can be as low as about -20° C and as high as about 45° C, and can vary over 20° C during the course of a day.

The transfer tape of the present invention, when used in conjunction with appropriate wrapping films, provides a protective wrapping that satisfies the above criteria.

The transfer tape is intended to be transformed into a protective wrap in stages. The end product of the first stage, produced under industrial conditions, is a transfer tape product with at least external releasable cover layers and, in preferred embodiments, at least one internal releasable separation (carrier) layer. This transfer tape product is capable of withstanding both rough handling and long-term storage without losing efficacy.

During the second stage, also carried out under industrial conditions, the external cover layers are removed from the transfer tape product and are replaced with wrapping material. It is during this stage that the outer adhesive layer is adhered to the outer wrap layer. At this stage, the inner wrap layer is adhered to a third adhesive layer, not to the inner adhesive layer. The inner wrap layer remains releasably attached to an internal releasable separation (carrier) layer.

During the third stage, carried out under field conditions, the second stage product is wrapped around the material to be protected, the remaining separation (carrier) layer or layers are detached, and the portions of the final wrap (disjoint after removal of the separation layer(s)) are joined together by means of the freshly-exposed adhesive layer(s), forming the final protective wrap. All of these stages are described in more detail herein below.

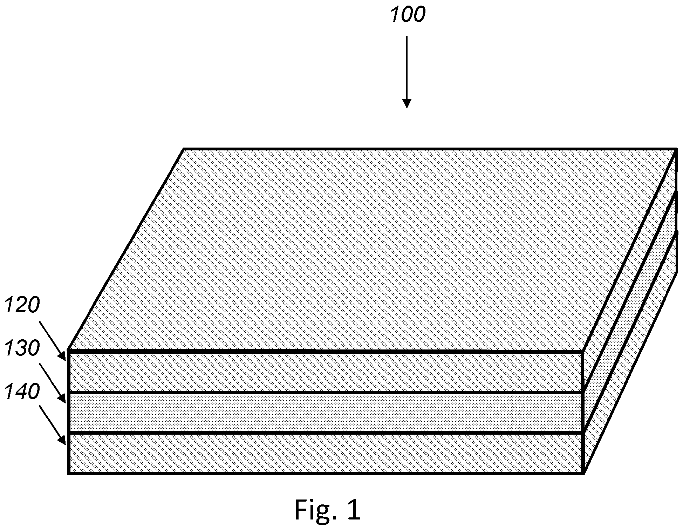

An embodiment of the transfer tape (**100**) is shown in **Fig. 1****.** The transfer tape comprises a UV protective film **130** sandwiched between two layers of adhesive, an outer adhesive layer (**120**) which comprises a UV-resistant adhesive applied at a thickness of between about 20 gm/m² and about 60 gm/m², and an inner adhesive layer (**140**) applied at a thickness of between about 50 gm/m² and about 120 gm/m².

The adhesives are pressure-sensitive adhesives.

The outer adhesive layer (**120**) comprises an acrylic adhesive and the inner adhesive layer (**140**) comprises a rubber-based adhesive.

The outer adhesive layer (**120**) can comprise a UV-cured adhesive, a solvent-borne adhesive, a water-borne adhesive or a hot-melt (solvent-less) adhesive.

In order to increase the UV protection provided to the inner adhesive layer (**140**), the outer adhesive layer (**120**) can comprise additives to block UV radiation. If the outer adhesive layer (**120**) comprises a UV-cured adhesive, the additives can block or absorb UVA (wavelengths 320-400nm) and UVB radiation (wavelengths 280-320nm) but must not block or absorb UVC radiation (wavelengths 100-280nm), which induces crosslinking of the adhesive.

The outer adhesive layer can also comprise components such as photostabilizers exemplified by, but not limited to, HALS - hindered amine light stabilizers, as well as free radical scavengers and quenchers, which slow down the degradation of UVA/UVB absorbers and of the adhesive itself.

If the outer adhesive layer (**120**) is not UV-cured, it can additionally comprise physical light blockers, typically pigments such as, but not limited to, titanium oxide or zinc oxide.

UV protection can be further increased by addition of at least one ultra-thin layer of particulate UV blocking material (not shown), either in conjunction with or in place of a UV protective film (**130**), with the layer(s) thin enough to allow a large interface between the adhesive layers (**120, 140**) to which it is adjacent, so that good bonding between the layer(s) (**120, 140**) is achieved.

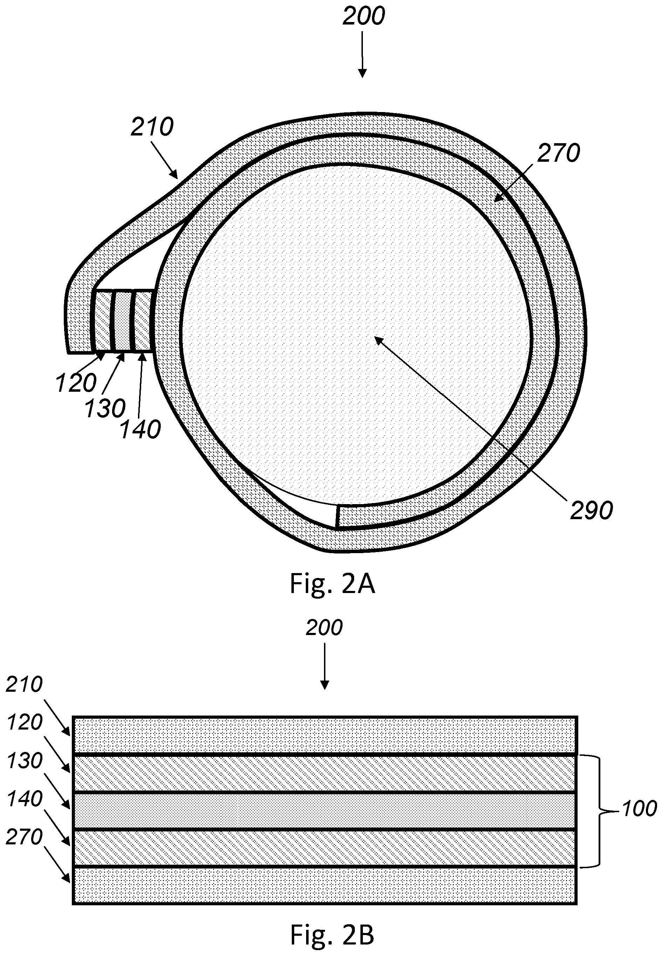

A protective wrap comprising the transfer tape is shown wrapping an exemplary bale of cotton (not to scale) in **Figs. 2A-B. Fig. 2A** schematically illustrates the protective wrap as wrapped around the bale, while **Fig. 2B** schematically illustrates the layers making up the wrap. The bale of cotton (**290**) is surrounded by an inner wrap layer (**270**), with the wrap layer material selected from a wrapping material typical of those known in the art. Adhering to the outside of the end of the inner wrap layer (**270**) and bonding the end of the inner wrap layer to the UV protective film (**130**) is the inner adhesive layer (**140**). The outer adhesive layer (**120**) bonds the UV protective film (**130**) to the outer wrap layer (**210**)**.**
In preferred embodiments, the external releasable cover layers comprise glassine release liner. In other embodiments, they can comprise any flexible releasable film with sufficient strength to withstand handling.

In preferred embodiments, the internal release liner (carrier layer) comprises PET film. In other embodiments, it can comprise any flexible releasable film with sufficient strength to withstand being mechanically separated from the transfer tape.

In preferred embodiments, the UV protective film blocks UV radiation by reflection and/or absorbance, thus protecting the inner adhesive.

The UV protective film can be comprised of a polyester film, or any other highly flexible film that permanently bonds to the desired adhesives. In preferred embodiments, the flexibility of the UV protective film is adjusted to minimize shearing forces caused by mismatch between the flexibility of the UV protective film and the flexibility of the wrap layers. This flexibility adjustment can be obtained by mechanical means, by chemical means, or by a combination thereof. Mechanical means typically comprise changing the thickness of the film or selecting a different film material. Chemical means include changing the fraction of plasticizers, fillers or binders in the film material, thereby changing the amount of cross-linking between polymer chains, or changing the molecular weight of the polymer chains - shorter (lighter) chains tend to be more flexible.

The outer adhesive layer (**120**), which, in the final protective wrapping, is outside the protection of the UV protective film, has the following properties:
- As an adhesive agent:
   - high hot shear resistance;
   - high hot/cold peel resistance;
   - good bonding under pressure to a plastic film substrate after long dwell time (weeks);
- As a material:
   - high resistance to the elements, including wetness (humidity and rain) and sunlight (UV radiation).

The inner adhesive layer, which, in the final protective wrapping, is inside the UV protective film, has the following properties:
- As an adhesive agent:
   - high hot shear resistance;
   - high hot/cold peel resistance;
   - high cold tack;
   - good immediate bonding to plastic film substrate
- As a material:
   - high resistance to wetness (humidity and rain).
   - Some resistance to UV radiation.

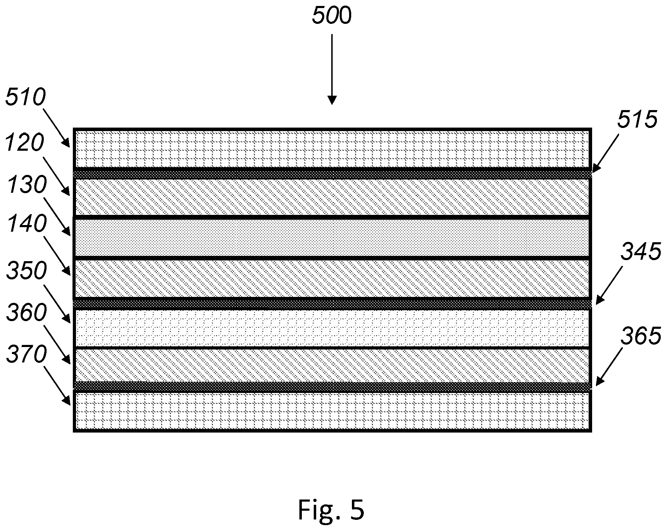

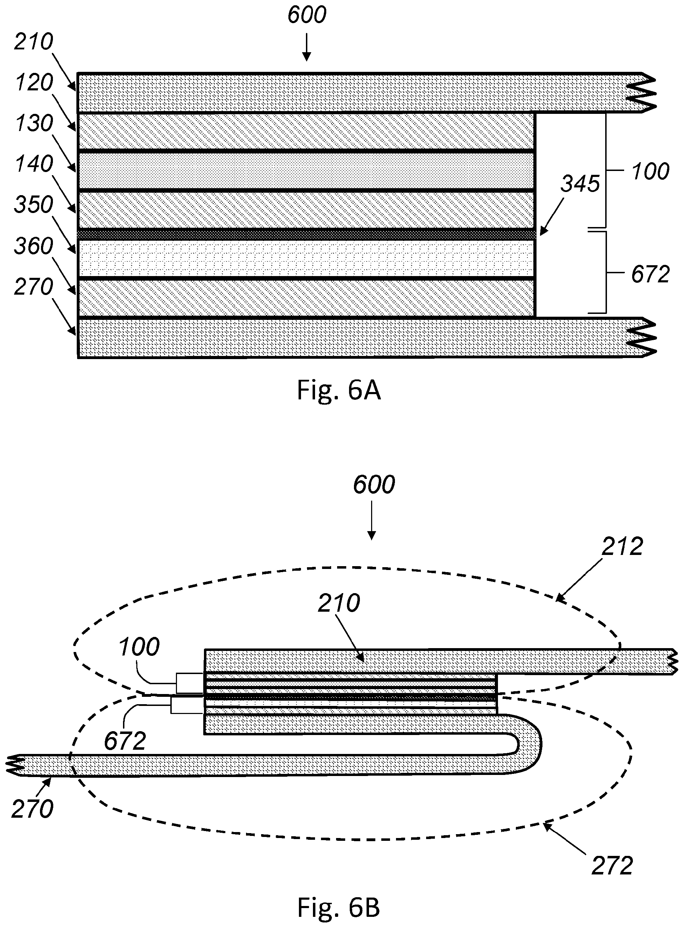

As described hereinabove, production of the wrapped product occurs in several stages, with the output of Stage 1 being a transfer tape product (**500,** **Fig. 5****,** below), the output of Stage 2 being a wrap-ready product (**600,** **Fig. 6****,** below), and the output of Stage 3 being an object, such as a bale of cotton, wrapped in, and protected by, the product (**200,** **Fig. 2A**)**.**

The exemplary production flow presented herein (Stages 1-3) for a transfer tape product (**500,** **Fig. 5****,** below) and, hence, a wrapped product with inner adhesive (**140**) protected by a UV protective film (**130**) is but one option for producing the laminate; there are alternative routes which can be used.

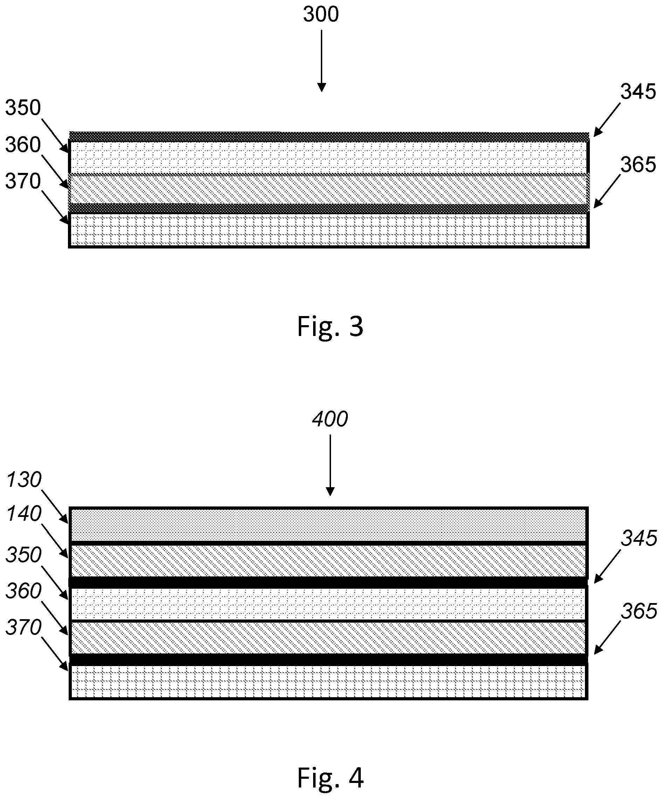

**Fig. 3** shows the output of Step 1 of Stage 1, sub-product 1 (**300**). Sub-product 1 (**300**) is formed by coating a glassine release liner (the white glassine release liner) (**370**) with a release layer (**365**) on the release layer (**365**) side with about 30gm/m² of permanent adhesive (**360**) (range 20-60 gm/m²), and laminating this with a siliconized PET release liner (**350**) with release layer (**345**), on its non-release layer side.

**Fig. 4** shows the output of Step 2 of Stage 1, sub-product 2 (**400**). To form sub-product 2 (**400**), sub-product 1 (**300**) is coated, on the siliconized release layer side **345** of the PET release liner, with inner transfer adhesive(s) (**140**) (coat weight about 50-120 gm/m²) and the inner transfer adhesive(s) (**140**) is laminated with a UV-protective film (**130**).

**Fig 5** shows the output of Step 3 of Stage 1, a storable product, the transfer tape product (**500**), comprising a transfer tape (**100**) between two release layers. The transfer tape product (**500**) is formed by coating sub-product 2 (**400**), on the UV protective film (**130**) side, with outer adhesive(s) (**120**) (coat weight about 20-60 gm/m²), and laminating the outer adhesive(s) (**120**) with yellow glassine release liner (**510**), with the release side (**515**) of the yellow glassine release liner (**510**) facing the outer adhesive layer (**120**).

The transfer tape product (**500**) can withstand handling, transportation and storage for an indefinite length of time (the transfer tape is guaranteed for 2 years from tape production until the end of use in the field) and it is envisaged that the transfer tape product (**500**) will be marketed.

In order to form the protective wrap, two additional stages, Stage 2 and Stage 3, are required. It is intended that Stage 2, like Stage 1, occurs under controlled conditions, for example, in a customer's factory, where temperature and cleanliness are controlled and there is an absence of free water, although control of humidity is not necessary.

During Stage 2, the white **(370)** and yellow **(510)** release liners are removed from the transfer tape product **(500);** for convenience, the transfer tape product without release liners will be referred to as the linking tape **(100, 672).** After removal of the release liners **(370, 510),** the leading edge of one piece of wrap film **(210, 270)** is bonded to the freshly-exposed side of the permanent adhesive layer **(360)** on the inner side of the linking tape **(100, 672),** while the trailing edge of a second piece of wrap film **(210, 270)** is bonded to the freshly-exposed side of the outer adhesive layer **(120).**

It should be noted that the portion of the linking tape **(100, 672)** bonded to the leading edge of a piece of wrap film **(210, 270)** is bonded to the outer side of the piece of wrap film **(210, 270),** while the portion of the linking tape **(100, 672)** bonded to the trailing edge of the piece of wrap film **(210, 270)** is bonded to the inner side of the piece of wrap film **(210, 270).**

As the wrap film **(210, 270)** is intended to go approximately two times around the cotton bale or other wrapped object, for convenience, the portion of the wrap film **(210, 270)** intended to form the inner layer of the final wrap will be referred to herein as the inner wrap layer **(270)** and the portion of the wrap film **(210, 270)** intended to form the outer layer of the final wrap will be referred to herein as the outer wrap layer **(210).**

The width of the transfer tape is preferably at least 75% of the width of the wrap film, so the transfer tape extends at least 3/4 of the way across at each end of the wrap film. The transfer tape is preferably positioned such that its center is approximately at the center of the width of the wrap film.

Typically, a portion of transfer tape is attached to the leading edge of one piece of wrap film **(210, 270)** and also to the trailing edge of a second piece of wrap film **(210, 270).** Therefore, production of wrap-ready material will result in a plurality of wraps linked end-to-end.

Removal of the release liners **(370, 510)** and attachment of the wrap film **(210, 270)** creates a wrap-ready product **600,** as shown in **Fig. 6A. Fig. 6A** shows only the portion of the wrap ready product comprising the linking tape **(100, 672);** at least a portion and preferably the majority of both the inner **(270)** and outer **(210)** wrap layers are not in contact with linking tape **(100, 672).**

In **Fig. 6A****,** the transfer tape, formed by the outer layers **(100)** of the linking tape **(100, 672)** are the layers **(120, 130, 140)** which are bonded to the trailing edge of one piece of wrap film and which will remain adhered to the outer wrap layer **(270)** in the final product, while the inner layers **(672)** of the linking tape **(100, 672)** are the layers **(350, 360)** which are bonded to the leading edge of a second piece of wrap film and will remain adhered to the inner wrap layer **(210)** in the final product.

**Fig. 6B** shows a larger portion of wrap ready product **(600)** comprising the linking tape **(100,** 672); the inner wrap layer **(270)** is folded back so that both the inner **(270)** and outer **(210)** wrap layers approach the transfer tape from the same side (in this non-limiting example, the right side).

The wrap-ready product can withstand handling, transportation, and storage for an indefinite length of time (it is guaranteed for 2 years). To be used, it is transported to the packing environment, usually an open field. In the field, the PET release liner **(350)** is removed, exposing the inner adhesive layer **(140).** The freshly-exposed adhesive layer **(140)** is then adhered to the wrap film **(270),** forming the final product, a protective wrap **(200),** as shown in **Fig. 2****.**

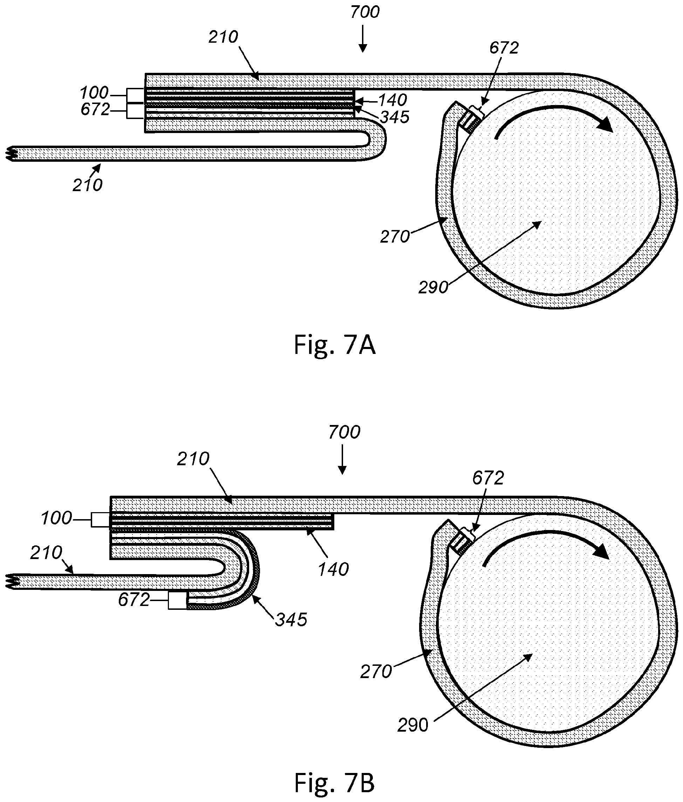

A schematic of an embodiment of an exemplary route **(700)** for adhering the inner adhesive layer **(140)** to the wrap film **(210, 270)** is shown schematically in **Figs. 7A, 7B****.** The process is shown after the wrapping process has started; the first wrap of the bale **(290)** is almost complete. The bale **(290)** is being rotated clockwise (CW), which pulls the wrap-ready product **(600)** from a roll or other storage means known in the art (not shown). In the exemplary embodiment shown schematically in **Figs. 7A** and **7B****,** purely for convenience in illustration the roll (not shown) is at the left and the wrap-ready product is drawn from the left towards the bale. In practice, the roll can be in any desired orientation relative to the bale and the wrap-ready product can be drawn towards the bale from any desired direction.

In **Fig. 7A****,** the trailing edge **(270)** of the current wrap and the leading edge **(210)** of the next wrap are shown in a fully-joined condition. In **Fig. 7B****,** the trailing edge **(270)** of the current wrap and the leading edge **(210)** of the next wrap have partially separated.

**Fig. 7B** shows the process at a slightly later stage. The linking tape **(100, 672)** is separating between the PET release layer **(345)** and the inner adhesive layer **(140),** exposing the inner adhesive layer **(140)** in the transfer tape layers **(100),** with the inner tape layers **(672)** remaining attached to the leading edge of the inner wrap layer **(270)** of the next wrap film.

As the bale **(290)** continues to rotate, the transfer tape **(100)** and the outer tape layer **(672)** separate completely. The wrap film **(210, 270)** continues to wrap around the bale, forming an inner wrap layer **(270)** and an outer wrap layer **(210).** During completion of the second wrap, the transfer tape **(100)** at the end of the outer wrap layer **(210)** will be adhered to the inner wrap layer **(270),** thereby creating protective wrap **900.**

It should be noted that a "tag" of wrap-ready product, comprising the inner tape layers **(672),** is left at the leading edge of the inner wrap layer **(270).**

Completion of two 360° rotations envelopes the bale **(290)** in a protective wrap **(200)** comprising two layers of wrapping film bonded together by a transfer tape **(100).** The transfer tape **(100),** which bonds the trailing end **(270)** of the wrap film to the inner wrap layer **(210)** comprises at least one internal UV protective layer **(130)** and at least one inner **(140)** and at least one outer **(120)** adhesive layer, where the outer adhesive layer **(120)** was bonded under controlled conditions and the inner adhesive layer **(140)** bonded under field conditions.

Therefore, the inner adhesive layer **(140)** is protected from wind, UV and wet, except at the edges, by the UV protective film **(130)** and the outer wrap layer **(210),** thereby providing a protective wrapping that can last up two years under field conditions.

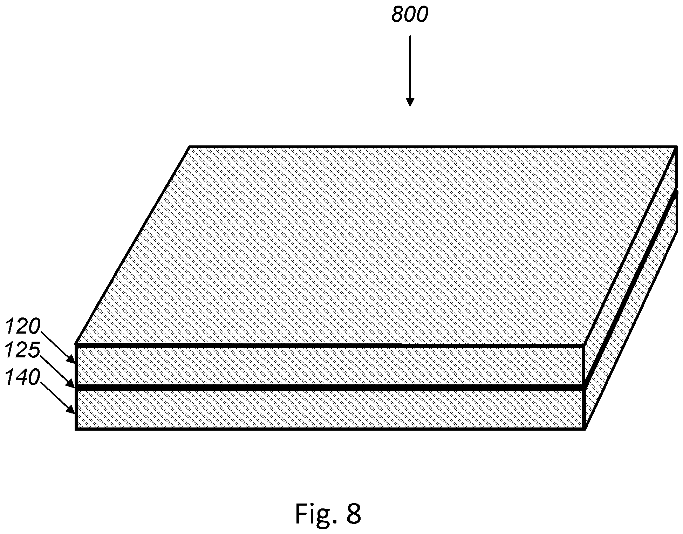

A transfer tape **(800)** not being part of the invention is shown in **Fig. 8****.** In this example, there is no UV protective film **(130);** the transfer tape **(800)** comprises two layers of adhesive, an outer adhesive layer **(120)** which comprises a UV-resistant adhesive applied at a thickness of between about 20 gm/m² and about 60 gm/m², an inner adhesive layer **(140)** applied at a thickness of about 50 gm/m² and about 120 gm/m² and, optionally, an ultra-thin layer of particulate UV blocking material **(125),** described in more detail herein below. In these examples, the outer adhesive layer **(130)** can also comprise additives to block or absorb the UV radiation, as described hereinbelow.

For clarity, the ultra-thin layer of particulate UV blocking material **(125)** will not be shown in the figures hereinbelow.

Typically, the outer adhesive layer **(120)** comprises an acrylic adhesive and the inner adhesive layer **(140)** comprises a rubber-based adhesive. However, any UV-resistant and water-resistant adhesive of suitable strength can be used in the outer adhesive layer **(120)** and any water-resistant adhesive of suitable strength can be used in the inner adhesive layer **(140).**

The outer adhesive layer **(120)** can comprise a UV-cured adhesive, a solvent-borne adhesive a water-borne adhesive or a hot-melt (solvent-less) adhesive.

The types of additives used to block the UV radiation from reaching the inner adhesive layer **(140)** will depend on the type of adhesive used in the outer adhesive layer **(120).** If the outer adhesive layer **(120)** comprises a UV-cured adhesive, the additives can block or absorb UVA and UVB radiation but must not block or absorb UVC radiation, which induces crosslinking of the adhesive.

The outer adhesive layer can also comprise components such as photostabilizers, exemplified by, but not limited to, HALS - hindered amine light stabilizers, as well as free radical scavengers and quenchers, which slow down the degradation of UVA/UVB absorbers and of the adhesive itself.

If the outer adhesive layer **(120)** is not UV-cured, it can additionally comprise physical light blockers, typically pigments such as, but not limited to, titanium oxide or zinc oxide.

In some variants without a UV protective film **(130),** UV protection would be provided by an ultra-thin layer of particulate UV blocking material **(****Fig. 8**, **125**), with the layer thin enough to allow a large interface between the outer adhesive layer **(120)** and the inner adhesive layer **(140),** so that good bonding of the layers is achieved.

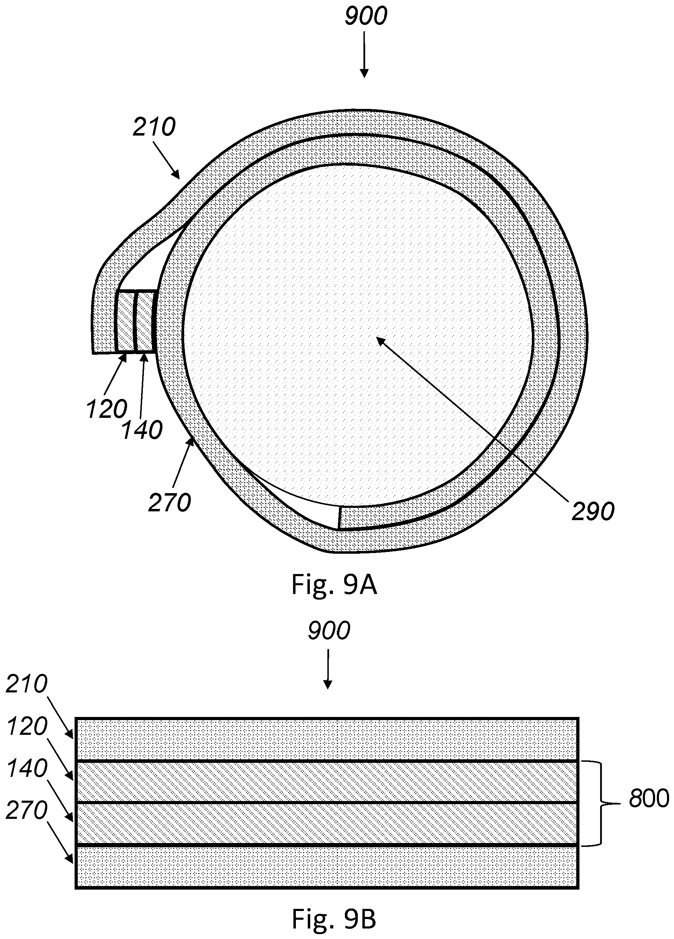

A protective wrap **(900)** comprising the transfer tape of Fig. 8 is shown wrapping an exemplary bale of cotton (not to scale) in **Figs. 9A-B. Fig. 9A** schematically illustrates the protective wrap **(900)** as wrapped around the bale **(290),** while **Fig. 9B** schematically illustrates the layers making up the wrap **(900).** The bale of cotton **(290)** is surrounded by an inner wrap layer **(270),** with the wrap layer material selected from a wrapping material typical of those known in the art. Adhering to the outside of the end of the inner wrap layer **(270)** is the inner adhesive layer **(140).** The outer adhesive layer **(120)** bonds the inner wrap layer **(140)** and the outer wrap layer **(210).**

The external releasable cover layers can comprise glassine release liner. In other examples, they can comprise any flexible releasable film with sufficient strength to withstand handling.

In preferred examples, the internal release liner (carrier layer) comprises PET film. In other examples, it can comprise any flexible releasable film with sufficient strength to withstand being mechanically separated from the transfer tape.

As described above, the outer adhesive layer **(120)** has the following properties:
- As an adhesive agent:
   - high hot shear resistance;
   - high hot/cold peel resistance;
   - good bonding under pressure to a plastic film substrate after long dwell time (weeks);
- As a material:
   - high resistance to the elements, including wetness (humidity and rain) and sunlight (UV radiation).

As described above, the inner adhesive layer **(140),** which, in the final protective wrapping, is protected by at least one UV protective layer, has the following properties:
- As an adhesive agent:
   - high hot shear resistance;
   - high hot/cold peel resistance;
   - high cold tack;
   - good immediate bonding to plastic film substrate
- As a material:
   - high resistance to wetness (humidity and rain).
   - Some resistance to UV radiation.

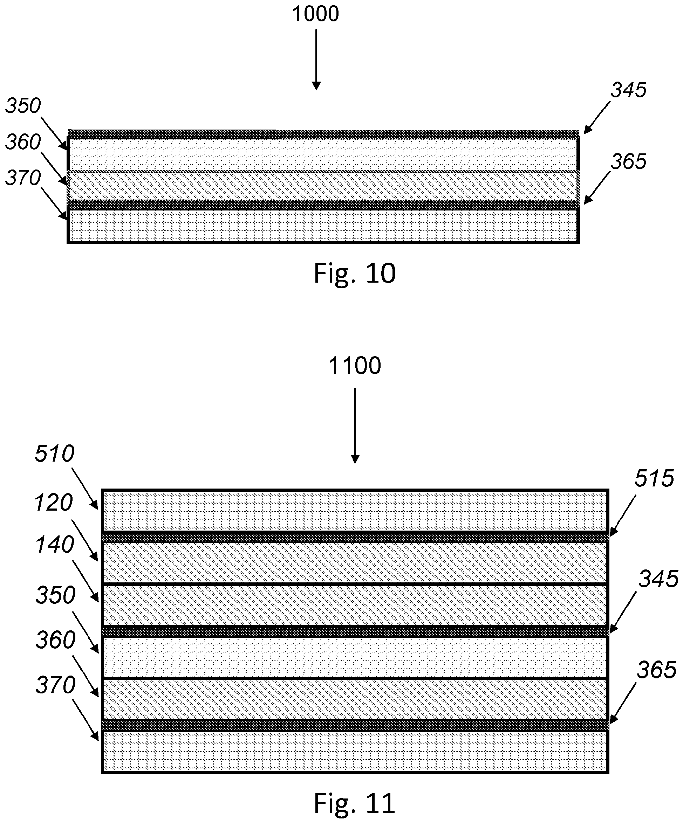

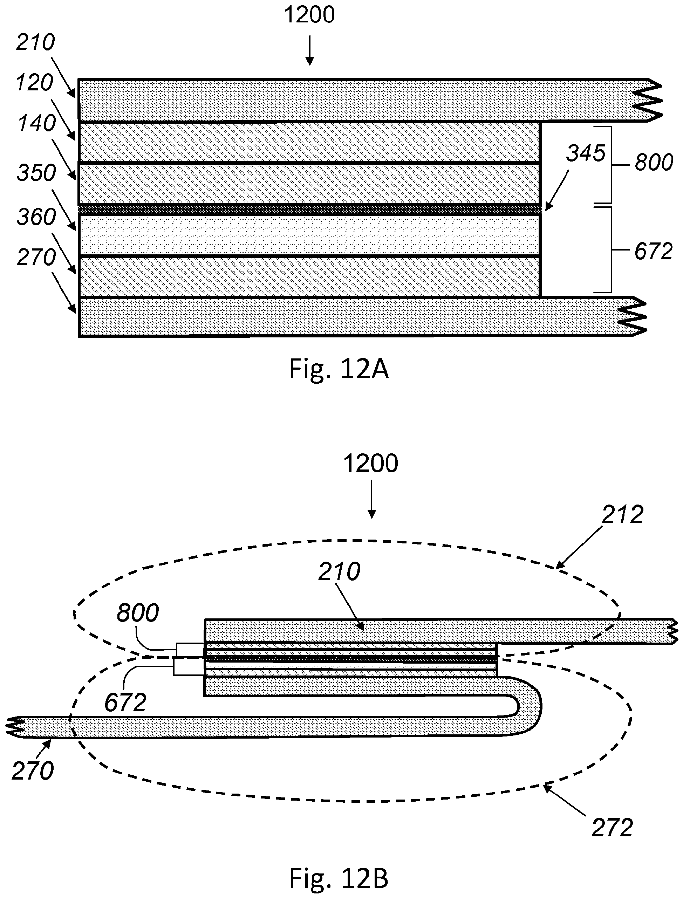

As described hereinabove, production of the wrapped product occurs in several stages, with the output of Stage 1 being a transfer tape product **(1100,** **Fig. 11****,** below), the output of Stage 2 being a wrap-ready product **(1200,** **Fig. 12A****,** below), and the output of Stage 3 being an object, such as a bale of cotton, wrapped in, and protected by, the product **(900,** **Fig. 9A****).**

The exemplary production flow presented herein (Stages 1-3) for a transfer tape product **(1100,** **Fig. 11****,** below) and, hence, a wrap material wherein UV protection for the inner adhesive **(140)** is provided by means other than an UV protective film **(130)** is but one option for producing the laminate; there are alternative routes which can be used.

In the exemplary production flow presented herein for a transfer tape product without UV protective film **(800),** Stage 1 has only two steps; there is no sub-product analogous to sub-product 2 **(400),** as this would entail a sub-product with an exposed adhesive layer. Therefore, the steps in Stage 1 for the exemplary production flow for the product without UV protective film **(800)** will be referred to as steps A and B.

**Fig. 10** shows the output of Step A of Stage 1, sub-product 1 **(1000).** Sub-product 1 **(1000)** is formed by coating a glassine release liner (the white glassine release liner) **(370)** with a release layer **(365)** on the release layer **(365)** side with about 30gm/m² of permanent adhesive **(360)** (range 20-60 gm/m²), and laminating this with a siliconized PET release liner **(350)** with release layer **(345),** on its non-release layer side.

It should be noted that, in this exemplary production flow, sub-product 1 **(1000)** has a layer structure identical to that of sub-product 1 of Step 1 of Stage 1 **(300)** for the product with UV protective film **(130).**

**Fig. 11** shows the output of Step B of Stage 1, a storable product, the transfer tape product **(1100),** comprising the transfer tape **(800)** between two release layers. The transfer tape product **(1100)** is formed by coating sub-product 1 **(1000)** on the siliconized release layer side **345** of the PET release liner with inner transfer adhesive(s) **(140)** (coat weight about 50-120 gm/m²). The inner transfer adhesive **(140)** is then coated with outer adhesive(s) **(120)** (coat weight about 20-60 gm/m²) and the outer adhesive(s) **(120)** is laminated with yellow glassine release liner **(510),** with the release side **(515)** of the yellow glassine release liner **(510)** facing the outer adhesive layer **(120).**

The inner adhesive **(140)** can be coated with an ultra-thin layer **(125,** not shown) of UV-protective particulate material, before the outer adhesive **(120)** is applied.

The transfer tape product **(1100)** can withstand handling, transportation and storage for an indefinite length of time (the transfer tape is guaranteed for 2 years from tape production until the end of use in the field) and it is envisaged that the transfer tape product **(1200)** will be marketed.

In order to form the protective wrap, two additional stages, Stage 2 and Stage 3, are required. It is intended that Stage 2, like Stage 1, occurs under controlled conditions, for example, in a customer's factory, where temperature and cleanliness are controlled and there is an absence of free water, although control of humidity is not necessary.

During stage 2, the white **(370)** and yellow **(510)** release liners are removed from the transfer tape product **(500),** After removal of the release liners **(370, 510),** the leading edge of one piece of wrap material **(210, 270)** is bonded to the freshly-exposed side of the permanent adhesive layer **(360)** on the inner side of the linking tape **(800, 672),** while the trailing edge of a second piece of wrap material **(210, 270)** is bonded to the freshly-exposed side of the outer adhesive layer **(120).**

As described hereinabove, the portion of the linking tape **(800, 672)** bonded to the leading edge of a piece of wrap material **(210, 270)** is bonded to the outer side of the piece of wrap material **(210, 270),** while the portion of the linking tape **(800, 672)** bonded to the trailing edge of the piece of wrap material **(210, 270)** is bonded to the inner side of the piece of wrap material **(210, 270).**

The width of the transfer tape is preferably at least 75% of the width of the wrap material, so the transfer tape extends at least 3/4 of the way across at each end of the wrap film. The transfer tape is preferably positioned such that its center is approximately at the center of the width of the wrap film.

As described hereinabove, using this method of production of wrap-ready material will result in a plurality of wraps linked end-to-end.

Removal of the release liners **(370, 510)** and attachment of the wrap material **(210, 270)** creates a wrap-ready product **(1200),** as shown in **Fig. 12A. Fig. 12A** shows only the portion of the wrap ready product **(1200)** comprising the linking tape **(800, 672);** at least a portion and preferably the majority of both the inner **(270)** and outer **(210)** wrap layers are not in contact with the linking tape **(800, 672).**

In **Fig. 12A****,** the transfer tape, comprising the outer layers **(800)** of the linking tape **(800, 672)** are the layers **(120, 140)** which are bonded to the trailing edge of one piece of wrap material and which will remain adhered to the outer wrap layer **(270)** in the final product, while the inner layers **(672)** of the linking tape **(800, 672)** are the layers **(350, 360)** which are bonded to the leading edge of a second piece of wrap material and will remain adhered to the inner wrap layer **(210)** in the final product.

**Fig. 12B** shows a larger portion of the wrap ready product **(600)** comprising the linking tape **(800, 672);** the inner wrap layer **270** is folded back so that both the inner **(270)** and outer **(210)** wrap layers approach the transfer tape from the same side (in this non-limiting example, the right side).

The wrap-ready product can withstand handling, transportation, and storage for an indefinite length of time (it is guaranteed for 2 years). To be used, it is transported to the packing environment, usually an open field. In the field, the PET release liner **350** is removed, exposing the inner adhesive layer **(140).** The freshly-exposed adhesive layer **(140)** is then adhered to the wrap film **(270),** forming the final product, a protective wrap, as shown in **Fig. 9****.**

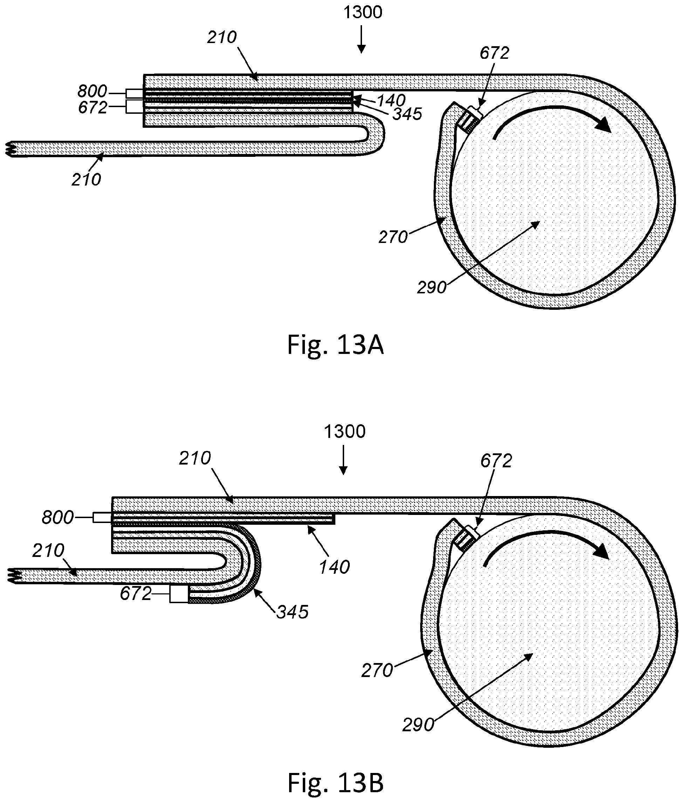

A schematic of an example of an exemplary route **(1300)** for adhering the inner adhesive layer **(140)** to the wrap film **(210, 270)** is shown schematically in **Figs. 13A-B****.** The process is shown after the wrapping process has started; the first wrap **(270)** of the bale **(290)** is almost complete. The bale **(290)** is being rotated clockwise (CW), which pulls the wrap-ready product **(1200)** from a roll or other storage means known in the art (not shown).

In the exemple shown schematically in **Figs. 13A** and **13B****,** purely for convenience in illustration, the roll (not shown) is at the left and the wrap-ready product is drawn from the left towards the bale. In practice, the roll can be in any desired orientation relative to the bale and the wrap-ready product can be drawn towards the bale from any desired direction.

In **Fig. 13A****,** the trailing edge **(270)** of the current wrap and the leading edge **(210)** of the next wrap are shown in a fully-joined condition. In Fig. **13B****,** the trailing edge **(270)** of the current wrap and the leading edge **(210)** of the next wrap have partially separated,

**Fig. 13B** shows the process at a slightly later stage. The linking tape **(800, 672)** is separating between the PET release layer **(345)** and the inner adhesive layer **(140),** exposing the inner adhesive **(140)** in the transfer tape layers **(800),** with the inner tape layers **(672)** remaining attached to the leading end of the inner wrap layer **(270)** of the next wrap film.

As the bale **(290)** continues to rotate, the transfer tape **(800)** and the outer tape layer **(672)** separate completely. The wrap film **(210, 270)** continues to wrap around the bale, forming an inner wrap layer **(270)** and an outer wrap layer **(210).** During completion of the second wrap, the transfer tape **(800)** at the end of the outer wrap layer **(210)** will be adhered to the inner wrap layer **(270),** thereby creating protective wrap **900.**

It should be noted that a "tag" of wrap-ready product, comprising the inner tape layers **(672),** is left at the leading edge of the inner wrap layer **(270).**

Completion of two 360° rotations envelopes the bale **(290)** in a protective wrap **(900)** comprising two layers of wrapping film bonded together by a transfer tape **(800).** The transfer tape **(800)** which bonds the trailing end of the wrap film **(270)** to the inner wrap layer **(210)** comprises inner **(140)** and outer **(120)** adhesive layers, where the outer **(120)** was bonded under controlled conditions and the inner **(140)** bonded under field conditions. The transfer tape **(800)** also comprises UV protection for the inner **(140)** adhesive layer, either as part of the outer adhesive layer **(120)** or as an ultra-thin layer of particles between the at least two adhesive layers.

Therefore, the inner adhesive layer **(140)** is protected from wind, UV and wet, except at the edges, by the UV protection and the outer wrap layer, thereby providing a protective wrapping that can last up two years under field conditions.

Methods of producing a laminate structure comprising two or more contacting adhesive layers include, but are not limited to:
- Using any conventional means known in the art for coating a film substrate for producing the first, inner layer **(140),** and applying the second, outer layer **(120)** using a non-contact coating method such as, but not limited to, curtain coating.

The two coatings **(140, 120)** would be performed consecutively inline (in one machine run). After the second coating, a laminating step would be performed, as described hereinabove.
- Applying both adhesive layers simultaneously using a co-extruder nozzle, then laminating as described hereinabove.

One non-limiting method of producing a laminate structure comprising two or more contacting adhesive layers separated only by an ultrathin particulate layer comprises:
1. One adhesive layer (either outer **(140)** or inner **(120))** would be produced using any conventional means known in the art for coating a film substrate.
2. An ultra-thin layer of solid blocking particles would be applied on top of the first adhesive layer, by means of spray coating or any other system known in the art for creating a thin coating of solid particles.
3. A second adhesive layer would then be coated on top of the particle layer, using a non-contact coating method such as, but not limited to, curtain coating.
   All three coating steps would be performed consecutively inline (in one machine run).
4. After the final adhesive coating, a laminating step would be performed, as described hereinabove.

As described hereinabove, the UV protection can comprise a UV protective film **130,** UV protective material within the outer adhesive layer **(120),** an ultra-thin layer of particulate UV blocking material **(125),** and any combination thereof. For non-limiting example, in an embodiment where a UV protective film **(130)** forms the main means of UV protection, the UV protection provided by the UV protective film **(130)** can be reduced and the full measure of UV protection restored using UV blocking or UV absorbing constituents in the outer adhesive layer **(120).**

## Claims

1. A transfer tape (100) useful for joining an outer layer (210) of a protective wrap to an inner layer (270) of said protective wrap, for protecting a bale of cotton, said transfer tape (100) having:
a. at least one outer adhesive layer (120) adapted to adhere at least one UV protective film (130) to said protective wrap's outer layer (210);
b. said at least one UV protective film (130) connected on a first side to said outer adhesive layer (120); and
c. at least one inner adhesive layer (140) connected to a second side of said at least one protective film (130), said inner adhesive layer (140) adapted to adhere to said protective wrap's inner layer (270),
**characterized in that**
said outer adhesive layer (120) comprises a pressure-sensitive acrylic adhesive, said pressure-sensitive acrylic adhesive being UV resistant and water resistant; said inner adhesive layer (140) comprises a pressure-sensitive rubber-based adhesive, said pressure-sensitive rubber-based adhesive being water resistant; and said UV protective film (130) being a UV-resistant flexible polymer film;
wherein resistance to degradation of a protective function of said transfer tape (100) adhered to said protective wrap under prolonged exposure to sunshine is generated by said UV resistance of said outer adhesive layer (120) and said UV resistance of said UV protective film (130), and resistance to damage by rain of said transfer tape (100) adhered to said protective wrap is generated by said water resistance of said outer adhesive layer and said water resistance of said inner adhesive layer (140).

2. The transfer tape (100) of claim 1, wherein at least one of the following is being held true
a. the thickness of said outer adhesive layer (120) is in the range of 20 gm/m² and 60 gm/m² of a first adhesive;
b. said transfer tape (100) is adherable to said protective wrap's outer layer (210) under industrial conditions and is adherable to said protective wrap's inner layer (270) under field conditions;
c. said outer adhesive layer (120) comprises a material selected from a group consisting of: a UV-cured adhesive, a solvent-borne adhesive, a water-borne adhesive, and a hot-melt (solvent-less) adhesive;
d. the thickness of said inner adhesive layer (140) is in the range of 50 gm/m² and 120 gm/m² of a second adhesive;
e. said inner adhesive layer (140) comprises an adhesive having the following properties: high hot shear resistance, high hot peel resistance, high cold peel
resistance, high cold track, good immediate bonding to plastic film substrate; high resistance to wetness, and some resistance to UV radiation; and
f. said transfer tape (100) additionally comprising a layer of particulate UV blocking material (125); at least one of the following is being held true: (i) said particulate UV blocking material (125) comprises at least one pigment; (ii) said particulate UV blocking material (125) comprises at least one pigment selected from a group consisting of titanium oxide, zinc oxide and any combination thereof.

3. The transfer tape (100) of claim 1, wherein said at least one outer adhesive layer (120) additionally comprises at least one UV protective material; at least one of the following is being held true
a. said at least one UV protective material comprises an additive selected from a group consisting of: UVA reflectors, UVB reflectors, UVA absorbers, UVB absorbers, and any combination thereof;
b. said at least one UV protective material comprises at least one photostabilizer; and
c. said at least one UV protective material is at least one photostabilizer selected from a group consisting of hindered amine light stabilizer, HALS, free radical scavengers, free radical quenchers and any combination thereof.

4. The transfer tape (100) of claim 1, comprised within a protective wrap for a product to be left in the open air, said protective wrap comprising
a. an outer protective layer (210); and
b. an inner protective layer (270);
wherein said transfer tape (100) joins said outer protective layer (210) to said inner protective layer (270).

5. The transfer tape (100) of claim 1, comprised within a transfer tape product, said transfer tape product adapted for storage and transportation of said transfer tape (100), said transfer tape product additionally comprising:
a. an outer cover layer (510) releasably attached to a first side of said transfer tape (100);
b. a central carrier layer (350) with a first side releasably attached to a second side of said transfer tape (100);
c. a permanent adhesive layer (360) with first side attached to a second side of said central carrier layer (350); and
d. an inner cover layer (370) releasably attached to a second side of said permanent adhesive layer (360).

6. A method of producing a transfer tape (100) useful as a closure tape for a protective wrap for protecting a bale of cotton, comprising steps of:
a. providing a UV protective film (130);
b. attaching at least one outer adhesive layer (120) to a first side of said UV protective film (130); and
c. attaching at least one inner adhesive layer (140) to a second side of said UV protective film (130);
**characterized in that**
said outer adhesive layer (120) comprises a pressure-sensitive acrylic adhesive, said pressure-sensitive acrylic adhesive being UV resistant and water resistant; said inner adhesive layer (140) comprises a rubber-based adhesive, said rubber adhesive being water resistant; and said UV protective film (130) being a UV-resistant flexible polymer film; wherein resistance to degradation of a protective function of said transfer tape (100) adhered to said protective wrap under prolonged exposure to sunshine is generated by said UV resistance of said outer adhesive layer (120) and said UV resistance of said UV protective film (130), and resistance to damage by rain of said transfer tape (100) adhered to said protective wrap is generated by said water resistance of said outer adhesive layer and said water resistance of said inner adhesive layer (140).

7. The method of claim 6, additionally comprising at least one step selected from a group consisting of
a. selecting the thickness of said outer adhesive layer (120) to be in the range of 20 gm/m² and 60 gm/m² of a first adhesive material;
b. selecting a material of said outer adhesive layer (120) from a group consisting of: a UV-cured adhesive, a solvent-borne adhesive, a water-borne adhesive, and a hot-melt (solvent-less) adhesive;
c. selecting the thickness of said inner adhesive layer (140) to be in the range of 50 gm/m² to 120 gm/m² of a second adhesive; and
d. selecting said inner adhesive layer (140) to be an adhesive having the following properties: high hot shear resistance, high hot peel resistance, high cold peel resistance, high cold track, good immediate bonding to plastic film substrate, high resistance to wetness, and some resistance to UV radiation; and
e. providing said transfer tape (100) with a layer of particulate UV blocking material (125); at least one of the following being held true: (i) said particulate UV blocking material (125) comprises at least one pigment; (ii) said particulate UV blocking material (125) comprises at least one pigment selected from a group consisting of titanium oxide, zinc oxide and any combination thereof.

8. The method of claim 6, additionally comprising steps of providing at least one UV protective material within said at least one outer adhesive layer (120); further wherein said method additionally comprising at least one step selected from
a. selecting said at least one UV protective material to be an additive selected from a group consisting of: UVA reflectors, UVB reflectors, UVA absorbers, UVB absorbers, and any combination thereof;
b. providing at least one photostabilizer as said at least one UV protective material; and
c. providing, as said at least one UV protective material, at least one photostabilizer comprising hindered amine light stabilizer, HALS, free radical scavengers, free radical quenchers and any combination thereof.

9. The method of claim 6, additionally comprising steps for producing a protective wrap for a product to be left in the open air, said steps comprising:
a. providing said protective wrap's outer layer (210);
b. providing said protective wrap's inner layer (270);
c. providing said transfer tape (100);
d. adhering said protective wrap's outer layer (210) to a first side of said at least one UV protective film (130);
e. wrapping said protective wrap's inner layer (270) around said product such that a second side of said protective wrap's inner layer (270) faces said product;
f. adhering a first side of said protective wrap's inner layer (270) to a second side of said at least one inner adhesive layer (140).

10. The method of claim 9, wherein said steps of adhering said protective wrap's outer layer (210) to a first side of said outer adhesive layer (120) are carried out under industrial conditions and said steps of adhering said protective wrap's inner layer (270) to a second side of said inner adhesive layer (140) are carried out under field conditions.

11. The method of claim 6, additionally comprising steps for producing a transfer tape product for storage and transportation of a transfer tape (100), said steps comprising:
a. providing an outer cover layer (510);
b. releasably attaching said outer cover layer (510) to a first side of said transfer tape (100);
c. providing a central carrier layer (350);
d. releasably attaching a first side of said central carrier layer (350) to a second side of said transfer tape (100);
e. attaching a first side of an adhesive layer (360) to a second side of said central carrier layer (350);
f. providing an inner cover layer (370); and
g. releasably attaching to a second side of said adhesive layer (360) to said inner cover layer (370).

## Patentansprüche

1. Ein Übertragungsband (100), das zum Verbinden einer äußeren Schicht (210) einer Schutzhülle mit einer inneren Schicht (270) der Schutzhülle zum Schutz eines Baumwollbündels geeignet ist, wobei das Übertragungsband (100) Folgendes aufweist:
a. mindestens eine äußere Klebstoffschicht (120), die dazu geeignet ist, mindestens eine UV-Schutzfolie (130) an die äußere Schicht (210) der Schutzhülle zu kleben;
b. mindestens eine UV-Schutzfolie (130), die an einer ersten Seite mit der äußeren Klebstoffschicht (120) verbunden ist; und
c. mindestens eine innere Klebstoffschicht (140), die mit einer zweiten Seite der mindestens einen Schutzfolie (130) verbunden ist, wobei die innere Klebstoffschicht (140) so ausgelegt ist, dass sie an der inneren Schicht (270) der Schutzhülle haftet, **dadurch gekennzeichnet, dass**
die äußere Klebstoffschicht (120) einen druckempfindlichen Acrylklebstoff umfasst, wobei der druckempfindliche Acrylklebstoff UV- und wasserbeständig ist; die innere Klebstoffschicht (140) einen druckempfindlichen Klebstoff auf Gummibasis enthält, wobei der druckempfindliche Klebstoff auf Gummibasis wasserbeständig ist; und die UV-Schutzfolie (130) eine UV-beständige flexible Polymerfolie ist;
wobei die Beständigkeit gegen die Beeinträchtigung einer Schutzfunktion des an der Schutzhülle haftenden Übertragungsbandes (100) bei längerer Sonneneinstrahlung durch die UV-Beständigkeit der äußeren Klebstoffschicht (120) und die UV-Beständigkeit der UV-Schutzfolie (130) erzeugt wird, und die Beständigkeit gegen eine Beschädigung des an der Schutzhülle haftenden Übertragungsbandes (100) durch Regen durch die Wasserbeständigkeit der äußeren Klebstoffschicht und die Wasserbeständigkeit der inneren Klebstoffschicht (140) erreicht wird.

2. Das Übertragungsband (100) nach Anspruch 1, wobei mindestens eine der folgenden Bedingungen erfüllt ist:
a. Die Dicke der äußeren Klebstoffschicht (120) liegt im Bereich von 20 gm/m² und 60 g/m² eines ersten Klebstoffs;
b. das Übertragungsband (100) unter industriellen Bedingungen an der äußeren Schicht (210) der Schutzhülle und unter Feldbedingungen an der inneren Schicht (270) der Schutzhülle haftet;
c. die äußere Klebstoffschicht (120) ein Material enthält, das aus einer Gruppe ausgewählt wird, die aus folgenden Materialien besteht: einem UV-gehärteten Klebstoff, einem Klebstoff auf Lösungsmittelbasis, einem Klebstoff auf Wasserbasis und einem (lösungsmittelfreien) Schmelzklebstoff;
d. die Dicke der inneren Klebstoffschicht (140) im Bereich von 50 gm/m² und 120 gm/m² eines zweiten Klebstoffs liegt;
e. die innere Klebstoffschicht (140) einen Klebstoff mit den folgenden Eigenschaften umfasst: hohe Heißscherbeständigkeit, hohe Heißschälbeständigkeit, hohe Kaltschälbeständigkeit, hohe Kältespur, gute sofortige Bindung an das Kunststofffoliensubstrat; hohe Beständigkeit gegen Nässe und eine gewisse Beständigkeit gegen UV-Strahlung; und
f. das Übertragungsband (100) zusätzlich eine Schicht aus partikelförmigem UV-blockierendem Material (125) umfasst; wobei mindestens eine der folgenden Bedingungen erfüllt ist: (i) das partikelförmige UV-blockierende Material (125) umfasst mindestens ein Pigment; (ii) das partikelförmige UV-blockierende Material (125) umfasst mindestens ein Pigment, das aus einer Gruppe ausgewählt ist, die aus Titanoxid, Zinkoxid und einer beliebigen Kombination davon besteht.

3. Das Übertragungsband (100) nach Anspruch 1, wobei die mindestens eine äußere Klebstoffschicht (120) zusätzlich mindestens ein UV-Schutzmaterial umfasst; wobei mindestens eine der folgenden Bedingungen gilt:
a. Das mindestens eine UV-Schutzmaterial umfasst einen Zusatzstoff, der aus einer Gruppe ausgewählt wird, die aus folgenden Materialien besteht: UVA-Reflektoren, UVB-Reflektoren, UVA-Absorbem, UVB-Absorbern und jeder beliebigen Kombination davon;
b. das mindestens eine UV-Schutzmaterial mindestens einen Photostabilisator umfasst; und
c. das mindestens eine UV-Schutzmaterial mindestens ein Photostabilisator ist, der aus einer Gruppe ausgewählt ist, die aus gehinderten Amin-Lichtstabilisatoren, HALS, Radikalfängern, Radikallöschern und jeder beliebigen Kombination davon besteht.

4. Das Übertragungsband (100) nach Anspruch 1, das in einer Schutzhülle für ein Produkt enthalten ist, das im Freien aufbewahrt werden soll, wobei die Schutzhülle Folgendes umfasst
a. eine äußere Schutzschicht (210); und
b. eine innere Schutzschicht (270);
wobei das Übertragungsband (100) die äußere Schutzschicht (210) mit der inneren Schutzschicht (270) verbindet.

5. Das Übertragungsband (100) nach Anspruch 1, das in einem Übertragungsbandprodukt enthalten ist, wobei das Übertragungsbandprodukt für die Lagerung und den Transport des Übertragungsbandes (100) geeignet ist, wobei das Übertragungsbandprodukt zusätzlich umfasst:
a. eine äußere Deckschicht (510), die lösbar an einer ersten Seite des Übertragungsbandes (100) befestigt ist;
b. eine zentrale Trägerschicht (350), die mit einer ersten Seite lösbar an einer zweiten Seite des Übertragungsbandes (100) befestigt ist;
c. eine permanente Klebstoffschicht (360), deren erste Seite an einer zweiten Seite der zentralen Trägerschicht (350) befestigt ist; und
d. eine innere Deckschicht (370), die lösbar an einer zweiten Seite der dauerhaften Klebstoffschicht (360) befestigt ist.

6. Ein Verfahren zur Herstellung eines Übertragungsbandes (100), das als Verschlussband für eine Schutzhülle zum Schutz eines Baumwollbündels geeignet ist, umfasst die folgenden Schritte:
a. Bereitstellen einer UV-Schutzfolie (130);
b. Anbringen mindestens einer äußeren Klebstoffschicht (120) auf einer ersten Seite der UV-Schutzfolie (130); und
c. Anbringen mindestens einer inneren Klebstoffschicht (140) auf einer zweiten Seite der UV-Schutzfolie (130);
**dadurch gekennzeichnet, dass**
die äußere Klebstoffschicht (120) einen druckempfindlichen Acrylklebstoff umfasst, wobei der druckempfindliche Acrylklebstoff UV und wasserbeständig ist; die innere Klebstoffschicht (140) einen Klebstoff auf Gummibasis umfasst, wobei der Gummiklebstoff wasserbeständig ist; und die UV-Schutzfolie (130) eine UV-beständige flexible Polymerfolie ist; wobei die Beständigkeit gegen eine Beeinträchtigung der Schutzfunktion des an der Schutzhülle haftenden Übertragungsbandes (100) bei längerer Sonneneinstrahlung durch die UV-Beständigkeit der äußeren Klebeschicht (120) und die UV-Beständigkeit der UV-Schutzfolie (130) erzeugt wird und die Beständigkeit gegen eine Beschädigung des an der Schutzhülle haftenden Übertragungsbandes (100) durch Regen durch die Wasserbeständigkeit der äußeren Klebeschicht und die Wasserbeständigkeit der inneren Klebeschicht (140) erzeugt wird.

7. Das Verfahren nach Anspruch 6, das zusätzlich mindestens einen Schritt umfasst, der aus der folgenden Gruppe ausgewählt wird:
a. Auswahl der Dicke der äußeren Klebstoffschicht (120) in einem Bereich zwischen 20 g/m² und 60 g/m² eines ersten Klebstoffs;
b. Auswahl eines Materials für die äußere Klebstoffschicht (120) aus einer Gruppe bestehend aus: einem UV-gehärteten Klebstoff, einem lösungsmittelbasierten Klebstoff, einem wasserbasierten Klebstoff und einem (lösungsmittelfreien) Schmelzklebstoff;
c. Auswahl der Dicke der inneren Klebstoffschicht (140) im Bereich von 50 gm/m² bis 120 gm/m² eines zweiten Klebstoffs; und
d. Auswahl der inneren Klebstoffschicht (140) als Klebstoff mit den folgenden Eigenschaften: hohe Heißscherfestigkeit, hohe Heißschälfestigkeit, hohe Kaltschälfestigkeit, hohe Kältespur, gute Soforthaftung am Kunststofffoliensubstrat, hohe Beständigkeit gegen Nässe und eine gewisse Beständigkeit gegen UV-Strahlung; und
e. Versehen des Übertragungsbandes (100) mit einer Schicht aus partikelförmigem, UV-blockierendem Material (125), wobei mindestens eine der folgenden Bedingungen erfüllt sein muss: (i) das partikelförmige UV-blockierende Material (125) umfasst mindestens ein Pigment; (ii) das partikelförmige UV-blockierende Material (125) umfasst mindestens ein Pigment, das aus einer Gruppe ausgewählt ist, die aus Titanoxid, Zinkoxid und einer beliebigen Kombination davon besteht.

8. Das Verfahren nach Anspruch 6 umfasst zusätzlich die Schritte des Bereitstellens mindestens eines UV-Schutzmaterials innerhalb der mindestens einen äußeren Klebstoffschicht (120); wobei das Verfahren zusätzlich mindestens einen Schritt umfasst, der aus folgenden Schritten ausgewählt wird
a. Auswahl des mindestens einen UV-Schutzmaterials als Zusatzstoff, der aus einer Gruppe ausgewählt wird, die aus folgenden Materialien besteht: UVA-Reflektoren, UVB-Reflektoren, UVA-Absorbem, UVB-Absorbern und jeder beliebigen Kombination davon;
b. Bereitstellung mindestens eines Photostabilisators als das mindestens eine UV-Schutzmaterial; und
c. Bereitstellung mindestens eines Photostabilisators als das mindestens eine UV-Schutzmaterial, der einen gehinderten Amin-Lichtstabilisator, HALS, Radikalfänger, Radikallöscher und eine beliebige Kombination davon umfasst.

9. Das Verfahren nach Anspruch 6 umfasst zusätzlich Schritte zur Herstellung einer Schutzhülle für ein Produkt, das im Freien aufbewahrt werden soll, wobei diese Schritte Folgendes umfassen:
a. Bereitstellen der äußeren Schicht der Schutzhülle (210);
b. Bereitstellen der inneren Schicht (270) der Schutzhülle;
c. Bereitstellen des Übertragungsbandes (100);
d. Aufkleben der äußeren Schicht (210) der Schutzhülle auf eine erste Seite der mindestens einen UV-Schutzfolie (130);
e. Wickeln der inneren Schicht (270) der Schutzhülle um das Produkt, so dass eine zweite Seite der inneren Schicht (270) der Schutzhülle dem Produkt zugewandt ist;
f. Verkleben einer ersten Seite der inneren Schicht (270) der Schutzhülle mit einer zweiten Seite der mindestens einen inneren Klebstoffschicht (140).

10. Das Verfahren nach Anspruch 9, wobei die Schritte des Aufklebens der äußeren Schicht (210) der Schutzhülle auf eine erste Seite der äußeren Klebeschicht (120) unter industriellen Bedingungen und die Schritte des Aufklebens der inneren Schicht (270) der Schutzhülle auf eine zweite Seite der inneren Klebeschicht (140) unter Feldbedingungen durchgeführt werden.

11. Das Verfahren nach Anspruch 6, das zusätzlich Schritte zur Herstellung eines Übertragungsbandprodukts für die Lagerung und den Transport eines Übertragungsbandes (100) umfasst, wobei die Schritte Folgendes umfassen:
a. Bereitstellen einer äußeren Deckschicht (510);
b. das lösbare Befestigen der äußeren Deckschicht (510) an einer ersten Seite des Übertragungsbandes (100);
c. Bereitstellen einer mittleren Trägerschicht (350);
d. das lösbare Befestigen einer ersten Seite der mittleren Trägerschicht (350) an einer zweiten Seite des Übertragungsbandes (100);
e. Anbringen einer ersten Seite einer Klebstoffschicht (360) an einer zweiten Seite der zentralen Trägerschicht (350);
f. Bereitstellen einer inneren Deckschicht (370); und
g. das lösbare Befestigen einer zweiten Seite der Klebstoffschicht (360) an der inneren Deckschicht (370).

## Revendications

1. Un ruban de transfert (100) servant à joindre une couche extérieure (210) d'un film de protection à une couche intérieure (270) dudit film de protection, pour protéger une balle de coton, ledit ruban de transfert (100) ayant :
a. au moins une couche adhésive extérieure (120) adaptée pour faire adhérer au moins un film de protection anti-UV (130) à la couche extérieure (210) dudit film de protection ;
b. ledit au moins un film de protection anti-UV (130) relié sur un premier côté à ladite couche adhésive extérieure (120) ; et
c. au moins une couche adhésive intérieure (140) reliée à un second côté dudit au moins un film de protection (130), ladite couche adhésive intérieure (140) étant adaptée pour adhérer à la couche intérieure (270) dudit film de protection,
**caractérisé en ce que**
ladite couche adhésive extérieure (120) comprend un adhésif acrylique sensible à la pression, ledit adhésif acrylique sensible à la pression étant résistant aux UV et à l'eau ; ladite couche adhésive intérieure (140) comprend un adhésif à base de caoutchouc sensible à la pression, ledit adhésif à base de caoutchouc sensible à la pression étant résistant à l'eau ; et ledit film de protection anti-UV (130) étant un film polymère flexible résistant aux UV ;
dans lequel la résistance à la dégradation d'une fonction de protection dudit ruban de transfert (100) adhérant audit film de protection sous une exposition prolongée au soleil est générée par ladite résistance aux UV de ladite couche adhésive extérieure (120) et ladite résistance aux UV dudit film de protection anti-UV (130), et la résistance aux dommages causés par la pluie dudit ruban de transfert (100) adhérant audit film de protection est générée par ladite résistance à l'eau de ladite couche adhésive extérieure et ladite résistance à l'eau de ladite couche adhésive intérieure (140).

2. Le ruban de transfert (100) selon la revendication 1, dans lequel au moins l'un des éléments suivants est maintenu vrai
a. l'épaisseur de ladite couche adhésive extérieure (120) se situe dans l'intervalle compris entre 20 gm/m² et 60 gm/m² d'un premier adhésif ;
b. ledit ruban de transfert (100) est susceptible d'adhérer à ladite couche extérieure (210) du film de protection dans des conditions industrielles, étant également susceptible d'adhérer à la couche intérieure (270) dudit film de protection dans des conditions réelles ;
c. ladite couche adhésive extérieure (120) comprend un matériau choisi parmi un groupe constitué des matériaux suivants : un adhésif durci aux UV, un adhésif à base de solvant, un adhésif à base d'eau et un adhésif thermofusible (sans solvants) ;
d. l'épaisseur de ladite couche adhésive intérieure (140) se situe dans l'intervalle compris entre 50 gm/m² et 120 gm/m² d'un second adhésif ;
e. ladite couche adhésive intérieure (140) comprend un adhésif ayant les propriétés suivantes : résistance élevée au cisaillement à chaud, résistance élevée au pelage à chaud, résistance élevée au pelage à froid, résistance élevée à la piste froide, bonne adhérence immédiate au substrat de film plastique ; résistance élevée à l'humidité et une certaine résistance aux rayons UV ; et
f. ledit ruban de transfert (100) comprenant en outre une couche de matériau particulaire bloquant les UV (125) ; au moins l'une des conditions suivantes doit être maintenue vraie : (i) ledit matériau particulaire bloquant les UV (125) comprend au moins un pigment ; (ii) ledit matériau particulaire bloquant les UV (125) comprend au moins un pigment choisi parmi un groupe constitué d'oxyde de titane, d'oxyde de zinc et de toute combinaison de ceux-ci.

3. Le ruban de transfert (100) selon la revendication 1, dans lequel ladite au moins une couche adhésive extérieure (120) comprend en outre au moins un matériau de protection anti-UV ; au moins l'une des conditions suivantes doit être maintenue vraie
a. ledit au moins un matériau de protection anti-UV comprend un additif choisi parmi un groupe constitué de : réflecteurs d'UVA, réflecteurs d'UVB, absorbeurs d'UVA, absorbeurs d'UVB, et toute combinaison de ceux-ci ;
b. ledit au moins un matériau de protection anti-UV comprend au moins un photostabilisateur ; et
c. ledit au moins un matériau de protection anti-UV est au moins un photostabilisateur choisi parmi un groupe constitué de stabilisants à la lumière de type amine encombrée (HALS), de capteurs de radicaux libres, d'extincteurs de radicaux libres et toute combinaison de ceux-ci.

4. Le ruban de transfert (100) selon la revendication 1, compris dans un film de protection pour un produit destiné à être laissé en plein air, ledit film de protection comprenant
a. une couche de protection extérieure (210) ; et
b. une couche de protection intérieure (270) ;
dans lequel ledit ruban de transfert (100) sert à joindre ladite couche de protection extérieure (210) à ladite couche de protection intérieure (270).

5. Le ruban de transfert (100) de la revendication 1, comprise dans un produit de ruban de transfert, ledit produit de ruban de transfert étant adapté pour le stockage et le transport dudit ruban de transfert (100), ledit produit de ruban de transfert comprenant en outre :
a. une couche de recouvrement extérieure (510) fixée de manière amovible à un premier côté dudit ruban de transfert (100) ;
b. une couche de support centrale (350) avec un premier côté fixé de manière amovible à un second côté dudit ruban de transfert (100) ;
c. une couche adhésive permanente (360) avec un premier côté fixé à un second côté de ladite couche de support centrale (350) ; et
d. une couche de recouvrement intérieure (370) fixée de manière amovible à un second côté de ladite couche adhésive permanente (360).

6. Un procédé de production d'un ruban de transfert (100) destiné à être utilisé comme ruban de fermeture pour un film de protection destiné à protéger une balle de coton, consistant à :
a. fournir un film de protection anti-UV (130) ;
b. faire adhérer au moins une couche adhésive extérieure (120) à un premier côté dudit film de protection anti-UV (130) ; et
c. faire adhérer au moins une couche adhésive intérieure (140) à un second côté dudit film de protection anti-UV (130) ;
**caractérisé en ce que**
ladite couche adhésive extérieure (120) comprend un adhésif acrylique sensible à la pression, ledit adhésif acrylique sensible à la pression étant résistant aux UV et à l'eau ; ladite couche adhésive intérieure (140) comprend un adhésif à base de caoutchouc, ledit adhésif à base de caoutchouc étant résistant à l'eau ; et ledit film de protection anti-UV (130) étant un film polymère flexible résistant aux UV ;
dans lequel la résistance à la dégradation d'une fonction de protection dudit ruban de transfert (100) adhérant audit film de protection sous une exposition prolongée au soleil est générée par ladite résistance aux UV de ladite couche adhésive extérieure (120) et ladite résistance aux UV dudit film de protection anti-UV (130), et la résistance aux dommages causés par la pluie dudit ruban de transfert (100) adhérant audit film de protection est générée par ladite résistance à l'eau de ladite couche adhésive extérieure et ladite résistance à l'eau de ladite couche adhésive intérieure (140).

7. Le procédé selon la revendication 6, comprenant en outre au moins une étape choisie parmi un groupe consistant à
a. sélectionner l'épaisseur de ladite couche adhésive extérieure (120) de manière à ce qu'elle soit située dans l'intervalle compris entre 20 gm/m² et 60 gm/m² d'un premier adhésif ;
b. choisir un matériau de ladite couche adhésive extérieure (120) parmi un groupe constitué des matériaux suivants : un adhésif durci aux UV, un adhésif à base de solvant, un adhésif à base d'eau et un adhésif thermofusible (sans solvants) ;
c. sélectionner l'épaisseur de ladite couche adhésive intérieure (140) de manière à ce qu'elle soit située dans l'intervalle compris entre 50 gm/m² et 120 gm/m² d'un second adhésif ; et
d. sélectionner ladite couche adhésive intérieure (140) de manière à ce qu'elle soit un adhésif ayant les propriétés suivantes : résistance élevée au cisaillement à chaud, résistance élevée au pelage à chaud, résistance élevée au pelage à froid, résistance élevée à la piste froide, bonne adhérence immédiate au substrat de film plastique ; résistance élevée à l'humidité et une certaine résistance aux rayons UV ; et
e. pourvoir ledit ruban de transfert (100) d'une couche de matériau particulaire bloquant les UV (125) ; au moins l'une des conditions suivantes doit être maintenue vraie : (i) ledit matériau particulaire bloquant les UV (125) comprend au moins un pigment ; (ii) ledit matériau particulaire bloquant les UV (125) comprend au moins un pigment choisi parmi un groupe constitué d'oxyde de titane, d'oxyde de zinc et de toute combinaison de ceux-ci.

8. Le procédé selon la revendication 6, comprenant en outre les étapes consistant à pourvoir au moins un matériau de protection anti-UV à l'intérieur de ladite au moins une couche adhésive extérieure (120) ; et dans lequel, en outre, ledit procédé comprend au moins une des étapes suivantes
a. sélectionner ledit au moins un matériau de protection anti-UV de manière à ce qu'il comprenne un additif choisi parmi un groupe constitué de : réflecteurs d'UVA, réflecteurs d'UVB, absorbeurs d'UVA, absorbeurs d'UVB, et toute combinaison de ceux-ci ;
b. pourvoir au moins un photostabilisateur en tant que ledit au moins un matériau de protection anti-UV ; et
c. pourvoir, en tant que ledit au moins un matériau de protection anti-UV, au moins un photostabilisateur comprenant des stabilisants à la lumière de type amine encombrée (HALS), des capteurs de radicaux libres, des extincteurs de radicaux libres et toute combinaison de ceux-ci.

9. Le procédé selon la revendication 6, comprenant en outre les étapes à suivre pour produire un film de protection pour un produit destiné à être laissé en plein air, lesdites étapes comprenant :
a. pourvoir la couche extérieure (210) dudit film de protection ;
b. pourvoir la couche intérieure (270) dudit film de protection ;
c. pourvoir ledit ruban de transfert (100) ;
d. faire adhérer la couche extérieure (210) dudit film de protection à un premier côté dudit au moins un film de protection anti-UV (130) ;
e. enrouler la couche intérieure (270) dudit film de protection autour dudit produit de sorte qu'un second côté de la couche intérieure (270) dudit film de protection soit face audit produit ;
f. faire adhérer un premier côté de la couche intérieure (270) dudit film de protection à un second côté de ladite au moins une couche adhésive intérieure (140).

10. Le procédé selon la revendication 9, dans lequel lesdites étapes consistant à faire adhérer la couche extérieure (210) dudit film de protection à un premier côté de ladite couche adhésive extérieure (120) sont effectuées dans des conditions industrielles et lesdites étapes consistant à faire adhérer la couche intérieure (270) dudit film de protection à un second côté de ladite couche adhésive intérieure (140) sont effectuées dans des conditions réelles.

11. Le procédé selon la revendication 6, comprenant en outre les étapes de production d'un produit de ruban de transfert pour le stockage et le transport d'un ruban de transfert (100), lesdites étapes consistant à :
a. pourvoir une couche de recouvrement extérieure (510) ;
b. fixer de manière amovible ladite couche de recouvrement extérieure (510) à un premier côté dudit ruban de transfert (100) ;
c. pourvoir une couche de support centrale (350) ;
d. fixer de manière amovible un premier côté de ladite couche de support centrale (350) à un second côté dudit ruban de transfert (100) ;
e. fixer un premier côté d'une couche adhésive (360) à un second côté de ladite couche de support centrale (350) ;
f. pourvoir une couche de recouvrement intérieure (370) ; et
g. fixer de manière amovible à un second côté de ladite couche adhésive (360) ladite couche de recouvrement intérieure (370).
